# EUROPÄISCHE PATENTSCHRIFT

(11) **EP 0 562 554 B1**
(45) Veröffentlichungstag und Bekanntmachung des Hinweises auf die Patenterteilung: **12.01.2000**
(21) Anmeldenummer: 93104764.1
(22) Anmeldetag: 23.03.1993
(51) Int. Cl.: C04B 28/26, F24H 9/02, F24H 7/04, C04B 30/02

(54) **Heizgerät, insbesondere elektrisches Speicherheizgerät**
Heater, in particular electric storage heater
Appareil de chauffage, notamment appareil de chauffage électrique à accumulation

(30) Priorität: 23.03.1992 DE 9203839 U; 01.04.1992 DE 4210799; 13.04.1992 DE 4212359
(43) Veröffentlichungstag der Anmeldung: 29.09.1993
(73) Patentinhaber: KKW Kulmbacher Klimageräte-Werk GmbH, D-95326 Kulmbach (DE)
(72) Erfinder: Kohlrusch, Gerd-Dietmar, D-95326 Kulmbach (DE); Kaim, Leo, D-97640 Stockheim (DE)
(74) Vertreter: Zenz, Joachim Klaus, Dipl.-Ing.

(56) Entgegenhaltungen:
- DE-A- 2 611 115
- DE-A- 3 603 615
- DE-A- 3 916 097
- FR-A- 1 323 627
- FR-A- 2 149 517
- DATABASE WPI Week 9308, Derwent Publications Ltd., London, GB; AN 93-061572 & JP-A-5 009 083 (IBIDEN CO LTD) 19. Januar 1993
- DATABASE WPI Week 9037, Derwent Publications Ltd., London, GB; AN 90-280296 & JP-A-2 199 071 (IBIDEN CO LTD) 7. August 1990

## Beschreibung

Die Erfindung bezieht sich auf ein Speicherheizgerät mit einem Kern, einem Gehäuse und einer zwischen Kern und Gehäuse angeordneten Wärmedämmung. Insbesondere bezieht sich die Erfindung auf eine neuartige Wärmedämmung für ein elektrisches Speicherheizgerät. Mit prinzipiell gleichen Vorteilen ist die Wärmedämmung aber auch an anderen Heizgeräten, z.B. an Öl- oder Gasheizkesseln verwendbar, deren Brennkammer mit umgebendem Heizmediummantel hier als "Kern" bezeichnet wird.

Die folgende Beschreibung bezieht sich auf elektrische Speicherheizgeräte, deren Speicherkern auf Temperaturen bis etwa 800°C elektrisch aufgeheizt wird. Bekannte Wärmedämmungen bestanden und bestehen überwiegend aus faserhaltigem Material. Vor allem von Mikrofasern, die aufgrund ihrer geringen Durchmesser von <2µm lungengängig sind, gehen besondere Gesundheitsprobleme aus; ihnen ordnet man krebserregende Wirkungen zu.

Man hat daher versucht, bei der Wärmedämmung von Heizgeräten nur Wärmedämmstoffe zu verwenden, deren Fasern deutlich oberhalb der Stärke gefährlicher Mikrofasern liegen. Eine weitere Problemlösung zur Vermeidung von Gesundheitsschäden wurde in einer geeigneten Kapselung der Dämmschichten gesehen. Bei Beschädigungen der Kapselung der Wärmedämmung vor allem aufgrund rauhen betrieblichen Einsatzes können aber faserhaltige schädliche Dämmstoffe in die Umgebungsatmosphäre austreten.

Aus DE 36 03 615 A1 ist ein Speicherheizgerät mit einem aus zwei unterschiedlichen Wärmedämmmaterialien ausgestatteten Isolationsblock bekannt, wobei das die Luftführungskanäle begrenzende Wärmedämmmaterial faserfrei ist.

Aus DE 39 16 097 A1 ist eine Thermoisolationsmasse bekannt, die aus Wasserglas, Kieselerde (in Pulver- oder Kolloidform), Glimmer und weiteren Bestandteilen hergestellt wird. Die Bestandteile werden gemischt und härten anschließend unter Wärmeeinwirkung aus. Dabei kommt es zu einer Volumenzunahme.

Aus FR-A-2.149.517 ist ein Wärmedämmmaterial bekannt, das aus einer Mischung von Perliten unterschiedlicher Korngrößen besteht, wobei die Perlite-Mischung durch eine Natriumsilikatlösung gebunden ist.

Der Erfindung liegt die Aufgabe zugrunde, das Heizgerät der eingangs genannten Gattung so auszubilden, daß eine Gesundheitsschädigung durch austretende Fasern zuverlässig vermieden wird.

Dies gelingt erfindungsgemäß dadurch, daß alle Teile der Wärmedämmung, wenigstens aber alle von einem nach außen austretenden Luftstrom tangierten Teile der Wärmedämmung, aus faserfreiem Material bestehen, das eine Dauertemperaturbeständigkeit von mindestens 250°C hat; und daß das faserfreie Material der Wärmedämmung einen Gerüstbildner aus einem Vermiculit enthaltenden anorganischen Rohstoff, einen ein Trübungsmittel enthaltenden, reflektierenden Füllstoff zur Erhöhung der Wärmedämmwirkung und ein anorganisches Bindemittel zur Erhöhung der mechanischen Festigkeit enthält.

Der Füllstoff enthält gemäß einem Ausführungsbeispiel der Erfindung hochdisperse Kieselsäure.

Das anorganische Bindemittel kann gemäß einer Weiterbildung der Erfindung vernetzendes Wasserglas enthalten.

Die bisherigen Schwierigkeiten bei der Herstellung der notwendigen Wärmedichtigkeit vor allem bei elektrischen Speicherheizgeräten lassen sich gemäß einer Weiterbildung der Erfindung dadurch weitgehend beseitigen, daß die Wärmedämmung aus plattenartigen Formteilen zusammengesetzt ist, die über labyrinthartige und komplementäre Fugen vorzugsweise lösbar zusammengesetzt sind. Die Fugen sorgen trotz Wärmedehnungsspalten für eine Unterbrechung der Wärmestrahlung. Sollten in bestimmten Bereichen eines elektrischen Speicherheizgeräts auch im wesentlichen luftdichte Abschlüsse der Wärmedämmung erwünscht sein, so können auf der kalten Seite der Wärmedämmung im Fugenbereich faserfreie Dichtungen angebracht werden. Derartige Dichtungen können ggf. in situ zum Aushärten gebracht werden.

Weitere vorteilhafte Weiterbildungen der Erfindung ergeben sich aus den Unteransprüchen und der nachfolgenden Beschreibung von in der Zeichnung schematisch dargestellten Ausführungsbeispielen. In der Zeichnung zeigen:
Fig. 1 eine schematische Querschnittansicht durch ein elektrisches Speicherheizgerät;
Fig. 2 eine schematische Darstellung abgewandelter plattenförmiger Wärmedämmungsformteile, die Teil der Wärmedämmung eines Speicherheizgeräts bilden;
Fig. 3 schematisch einen Eckbereich einer Wärmedämmung mit im Fugenbereich eingebauter Dichtung; und
Fig. 4 schematisch ein abgewandeltes Ausführungsbeispiel mit Hohlräumen in einer Seitenwand.

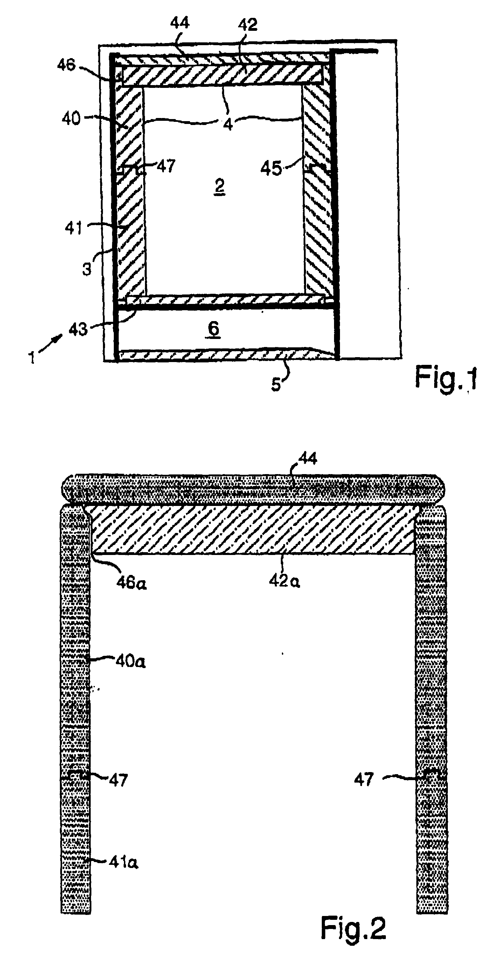

Das in Figur 1 schematisch dargestellte elektrische Speicherheizgerät 1 hat einen in Figur 1 als Leerraum dargestellten, überwiegend aus keramischem Material bestehenden Speicherkern 2, ein bis auf Luftzu- und -abführungen und Gerätedurchführungen geschlossenes äußeres Gehäuse 3 und eine aus mehreren plattenartigen Formteilen zusammengesetzte Wärmedämmung 4. Die Wärmedämmung 4 umschließt den durch den Speicherkern 2 eingenommenen Innenraum des Speicherheizgeräts und sorgt dafür, daß die konvektive Wärmeabführung vom Speicherkern in die Umgebungsatmosphäre klein gehalten wird.

Die Wärmedämmung, auf die es bei der Erfindung besonders ankommt, besteht in dem dargestellten Ausführungsbeispiel aus jeweils zwei Seitenwand-Formteilen 40 und 41, aus zwei Deckwandschichten 42 und 44 und einer Bodenwand 43. Eine Bodenplatte 5, die vorzugsweise ebenfalls aus wärmedämmendem Material besteht, begrenzt die Bodenseite einer Luftkammer 6.

Bei den beschriebenen Ausführungsbeispielen können alle plattenartigen Formteile 40...45 aus faserfreiem anorganischen Material bestehen . In Versuchen bewährt hat sich ein wärmedämmendes Material mit einem Gerüstbildner aus Vermiculit, einem Füllstoff aus hochdisperser Kieselsäure und Titandioxid als reflektierendem Trübungsmittel sowie einem vernetzenden Wasserglas zur Erzielung der notwendigen mechanischen Festigkeit. In allen Ausführungsformen sollte das faserfreie anorganische Material für den beschriebenen Anwendungsfall bei Speicherheizgeräten eine Dauertemperaturbeständigkeit von mehr als 250°C haben.

Wie in der Zeichnung zu sehen ist, sind die einzelnen plattenartigen Formteile 40...43 über labyrinthartige Fugen 46 bzw. ebenfalls labyrinthartige Nut-Federverbindungen 47 zusammengefügt. Dadurch gelingt es, einen Strahlungsaustritt aus dem Speicherkern 2 in die Umgebungsatmosphäre in der Regel ausreichend zuverlässig zu verhindern. Gegebenenfalls können an der kalten Außenseite noch geeignete Dichtlippen bzw. Dichtungselemente angebracht werden, die auch das unerwünschte Austreten von (Gebläse-)Luftströmen verhindern.

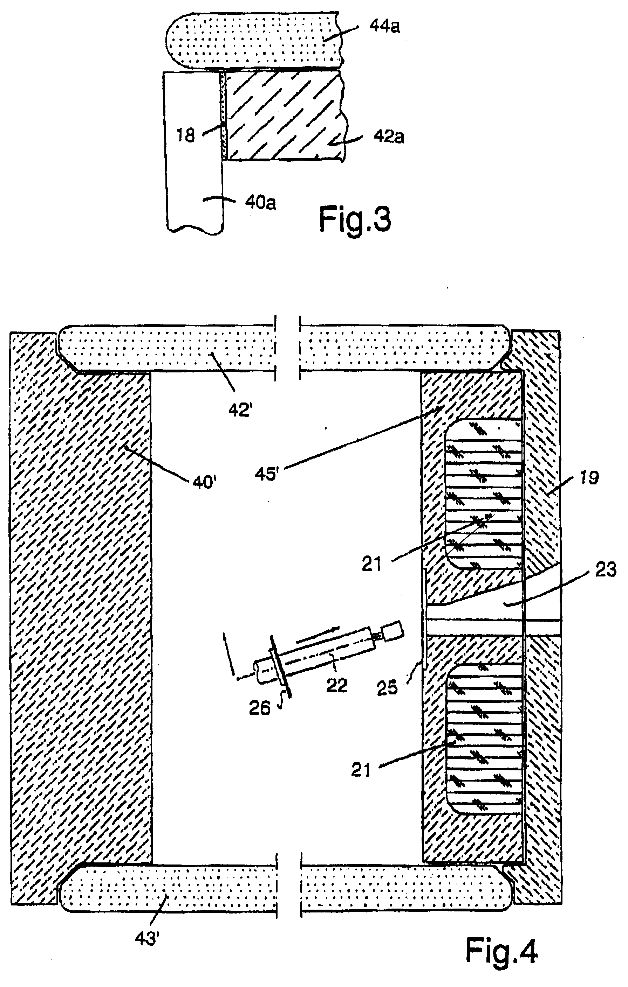

Eine abgewandelte Ausführungsform einer Wärmedämmungsanordnung - ebenfalls für ein elektrisches Speicherheizgerät - ist in Figur 3 als Teilansicht dargestellt. Auch dort sind die einzelnen plattenförmigen Formteile 40a, 41a, 42a mit komplementär gestalteten, labyrinthartigen Fugen versehen und zusammengesetzt, so daß eine Wärmebarriere auch ohne besondere Dichtelemente entsteht.

In der schematischen Teildarstellung der Wärmedämmung ist in die Fuge zwischen einer Seitenwand 40a und einer Deckwand 42a ein Dichtstreifen 18 aus geeignetem Weichmaterial eingefügt. Als Weichmaterial kommt neben dem oben genannten faserfreien Material ein Quarzseidengewebe oder hochschmelzendes Glasseidengewebe, vorzugsweise in Form von zusammengelegten Schlauchstücken in Betracht, wobei die Faserstärke > 5 µm sein sollte.

Die Figur 4 zeigt eine andere Ausführungsform der Wärmedämmung. Die Wärmedämmungsplatten 40', 42', 43' und 45' bestehen beispielsweise aus anorganisch gebundenem Vermiculit. Wesentlicher Unterschied zu den zuvor beschriebenen Ausführungsbeispielen ist die Einformung von Hohlräumen 21 in der Seitenwand 45' der Wärmedämmung. Diese Hohlräume 21 können mit hochwärmedämmenden Werkstoffen, beispielsweise Kieselgur, Perlite, Blähton, Blähschiefer o.dgl. gefüllt sein. An der Außenseiten der Seitenwand 45' ist eine Abdeckplatte 19 angefügt, die mit Überständen in zwischen den Platten 42 und 45' sowie zwischen den Platten 43' und 45' gebildete V-förmige Fugen einfaßt.

Zusätzlich zeigt Figur 4 eine besonders vorteilhafte Konstruktion, mit welcher Heizkörperstäbe, Temperaturfühler o.dgl. 22 wärmedicht in die Seitenwand 45' der Wärmedämmung eingefügt werden können. Zu diesem Zweck sind in der Wand 45' Durchbrechungen 23 vorgesehen, die sich aus Gründen der leichteren Montierbarkeit von innen nach außen erweitern. Auf der Innenseite ist in die Wand 45' eine Vertiefung 25 eingeformt, welche zur Aufnahme einer flanschartigen Dichtungsplatte 26 dient. Letztere ist an einem Heizstab 22 angeschweißt.

Im Rahmen des Erfindungsgedankens sind zahlreiche Abwandlungen möglich. So sind Labyrinthfugen ähnlich der Deckplatte in Figur 2 auch zwischen getrennten und ebenen Platten möglich, sofern die einzelnen Formteile in überlappender Anordnung vorgesehen werden. Eine Ecke ähnlich der Fuge 46 reicht häufig aus, so daß die kompliziertere Nut-Federverbindung überflüssig werden kann. Die beschriebene Wärmedämmung läßt sich mit den gleichen Vorteilen auch bei anderen Heizgeräten, so insbesondere bei Gas- und Ölfeuerungsanlagen und entsprechenden Kesseln verwenden.

## Patentansprüche

1. Speicherheizgerät mit einem Kern (2), einem Gehäuse (3) und einer zwischen Kern und Gehäuse angeordneten Wärmedämmung (4),
wobei wenigstens die von einem Luftstrom tangierten Teile der Wärmedämmung (4) aus faserfreiem Material bestehen, das eine Dauertemperaturbeständigkeit von mindestens 250°C hat;
wobei das faserfreie Material der Wärmedämmung (4) einen Gerüstbildner aus einem Vermiculit enthaltenden anorganischen Rohstoff, einen ein Trübungsmittel enthaltenden reflektierenden Füllstoff und ein anorganisches Bindemittel zur Erhöhung der mechanischen Festigkeit enthält.

2. Speicherheizgerät nach Anspruch 1, dadurch gekennzeichnet, daß der Füllstoff hoch disperse Kieselsäure enthält.

3. Speicherheizgerät nach Anspruch 1 oder 2, dadurch gekennzeichnet, daß das anorganische Bindemittel vernetzendes Wasserglas enthält.

4. Speicherheizgerät nach einem der Ansprüche 1 bis 3, dadurch gekennzeichnet, daß die Wärmedämmung (4) aus plattenartigen Formteilen (40 ... 44) zusammengesetzt ist.

5. Speicherheizgerät nach Anspruch 4, dadurch gekennzeichnet, daß die plattenartigen Formteile (40...44; 40a...42a) über labyrinthartig gestaltete Fugen (46, 47) zusammengesetzt sind.

6. Speicherheizgerät nach Anspruch 5, dadurch gekennzeichnet, daß die labyrinthartigen Fugen, insbesondere Stoßfugen, als Nut-Federverbindungen (47) ausgebildet sind.

7. Speicherheizgerät nach einem der Ansprüche 1 bis 6, dadurch gekennzeichnet, daß zusätzlich elastische Dichtmittel (48) an aneinander stoßenden pattenartigen Formteilen (40a, 42a) eingebaut sind.

8. Speicherheizgerät nach Anspruch 7, dadurch gekennzeichnet, daß die elastischen Dichtmittel (48) aus einem anorganischem Fasergewebe mit einer Faserstärke von mehr als 5µm bestehen.

9. Speicherheizgerät nach Anspruch 8, dadurch gekennzeichnet, daß die elastischen Dichtmittel (18) einen flachgelegten Gewebeschlauch aus anorganischem Fasergewebe mit einer Faserstärke von mehr als 5µm aufweisen.

10. Speicherheizgerät nach einem der Ansprüche 4-9, dadurch gekennzeichnet, daß wenigstens eine der seitlichen Wärmedämmplatten (40', 45') Hohlräume (21) aufweist, die mit hochwärmedämmenden Werkstoffen gefüllt sind.

11. Speicherheizgerät nach einem der Ansprüche 4-10, dadurch gekennzeichnet, daß wenigstens eine Seitenwand Durchtrittsöffnungen (23) für Heizkörperstäbe, Temperaturfühler o.dgl. (22) aufweist, die im bestückten Zustand mit flanschartigen Dichtungsplatten (26) verschlossen sind.

## Claims

1. Storage heater including a core (2), a housing (3) and thermal insulation (4) arranged between the core and housing, wherein at least the portions of the thermal insulation (4) contacted by an air current comprise fibre-free material which has a long term temperature resistance of at least 250°C; the fibre-free material of the thermal insulation (4) including a structure-former comprising an inorganic raw material containing vermiculite, a reflective filler containing an opacifier and an inorganic bonding agent to increase the mechanical strength.

2. Storage heater as claimed in claim 1, characterised in that the filler contains highly dispersed silica.

3. Storage heater as claimed in claim 1 or 2, characterised in that the inorganic bonding agent contains cross-linking water glass.

4. Storage heater as claimed in one of claims 1 to 3, characterised in that the heat insulation (4) is composed of plate-like shaped members (40...44).

5. Storage heater as claimed in claim 4, characterised in that the plate-like shaped members (40...44;40a...42a) are assembled by means of labyrinthine joints (46.47).

6. Storage heater as claimed in claim 5, characterised in that the labyrinthine joints, particularly butt joints, are constructed in the form of tongue and groove connections (47).

7. Storage heater as claimed in one of claims 1 to 6, characterised in that elastic sealing means (48) are additionally installed on mutually abutting plate-like shaped members (40a,42a).

8. Storage heater as claimed in claim 7, characterised in that elastic sealing means (48) comprise an inorganic fibrous fabric with a fibre thickness of more than 5µm.

9. Storage heater as claimed in claim 8, characterised in that the elastic sealing means (18) has a fabric hose laid flat of inorganic fibrous fabric with a fibre thickness of more than 5µm.

10. Storage heater as claimed in one of claims 4-9, characterised in that at least one of the lateral heat insulation plates (40',45') has internal cavities (21) which are filled with highly heat insulating materials.

11. Storage heater as claimed in one of claims 4-10, characterised in that at least one side wall has openings (23) for heating rods, temperature sensors or the like (22) which are sealed with flange-like sealing plates (26), when they are in use.

## Revendications

1. Appareil de chauffage à accumulation comportant un noyau (2), une enveloppe (3) et une isolation thermique (4) placée entre ce noyau et cette enveloppe,
au moins les parties de l'isolation thermique (4) auxquelles un courant d'air est tangent étant constituées d'une matière sans libres qui a une résistance à la température permanente d'au moins 250 °C,
la matière sans fibres de l'isolation thermique (4) contenant un formateur d'ossature constitué d'une matière brute inorganique contenant de la vermiculite, une matière de remplissage réfléchissante contenant un agent de trouble, et un liant inorganique destiné à augmenter la résistance mécanique.

2. Appareil de chauffage à accumulation selon la revendication 1, caractérisé par le fait que la matière de remplissage contient de la silice hautement dispersée.

3. Appareil de chauffage à accumulation selon l'une des revendications 1 et 2, caractérisé par le fait que le liant inorganique contient du silicate de potassium réticulant.

4. Appareil de chauffage à accumulation selon l'une des revendications 1 à 3, caractérisé par le fait que l'isolation thermique (4) est composée de pièces façonnées du genre plaque (40 à 44).

5. Appareil de chauffage à accumulation selon la revendication 4, caractérisé par le fait que les pièces façonnées du genre plaque (40 à 44 ; 40a à 42a) sont assemblées par des joints du genre à labyrinthe (46, 47).

6. Appareil de chauffage à accumulation selon la revendication 5, caractérisé par le fait que les joints du genre à labyrinthe, en particulier les joints d'about, sont constitués d'assemblages à rainure et languette (47).

7. Appareil de chauffage à accumulation selon l'une des revendications 1 à 6, caractérisé par le fait que, en plus, des moyens d'étanchéité élastiques (18) sont montés sur des pièces façonnées du genre plaque (40a, 42a) se joignant.

8. Appareil de chauffage à accumulation selon la revendication 7, caractérisé par le fait que les moyens d'étanchéité élastiques (18) sont constitués d'un tissu de fibres inorganiques ayant une grosseur de fibres de plus de 5 µm.

9. Appareil de chauffage à accumulation selon la revendication 8, caractérisé par le fait que les moyens d'étanchéité élastiques (18) présentent une gaine de tissu de fibres inorganiques mise à plat ayant une grosseur de fibres de plus de 5 µm.

10. Appareil de chauffage à accumulation selon l'une des revendications 4 à 9, caractérisé par le fait qu'au moins une des plaques isolantes thermiques latérales (40', 45') présente des cavités (21) qui sont remplies de matériaux à haut pouvoir d'isolation thermique.

11. Appareil de chauffage à accumulation selon l'une des revendications 4 à 10, caractérisé par le fait qu'au moins une paroi latérale présente des ouvertures de passage (23) pour des barreaux chauffants, des capteurs de température ou des éléments semblables (22) qui, à l'état garni, sont obturées par des plaques d'étanchéité du genre flasque (26).
